Europäisches Patentamt

(19) **European Patent Office**

**Office européen des brevets**

(11) Numéro de publication: **0 234 421**
**B1**

(12) **FASCICULE DE BREVET EUROPEEN**

(45) Date de publication du fascicule du brevet:
**18.07.90**

(21) Numéro de dépôt: **87101948.5**

(22) Date de dépôt: **12.02.87**

(51) Int. Cl.⁵: **F16F 15/03**, F16C 39/06,
H02K 7/09

(54) Amortisseur de vibrations d'une ligne d'arbre.

(30) Priorité: **14.02.86 FR 8602037**

(43) Date de publication de la demande:
**02.09.87 Bulletin 87/36**

(45) Mention de la délivrance du brevet:
**18.07.90 Bulletin 90/29**

(84) Etats contractants désignés:
**AT BE CH DE ES FR GB GR IT LI LU NL SE**

(56) Documents cités:
**FR-A- 1 186 527**
**FR-A- 2 239 038**
**FR-A- 2 327 439**
**US-A- 3 224 818**
**US-A- 4 285 552**

(73) Titulaire: **GEC ALSTHOM SA, 38, avenue Kléber,
F-75116 Paris(FR)**

(72) Inventeur: **Lecomte, Thierry, 37, rue des Maquisards
Offemont, F-90300 Valdoie(FR)**

(74) Mandataire: **Weinmiller, Jürgen et al,
Lennéstrasse 9 Postfach 24, D-8133 Feldafing(DE)**

ACTORUM AG

.Description

La présente invention concerne un amortisseur de vibrations d'une ligne d'arbre. De telles vibrations se produisent soit au passage des vitesses de rotation critiques, soit de manière permanente lorsque la ligne d'arbre est mal équilibrée.

On a déjà proposé dans le document US-A-3224818 d'amortir les vibrations d'une ligne d'arbre à l'aide de paliers magnétiques, comportant des électro-aimants que l'on excite à travers un système de régulation en fonction du décentrement de l'arbre, enregistré par des capteurs. Un tel système de régulation est relativement complexe et induit des pertes magnétiques importantes dans l'arbre en régime permanent, à moins que l'on ne recoure à un rotor feuilleté, plus coûteux.

La présente invention a pour but de procurer un amortisseur de vibrations d'une ligne d'arbre qui soit de structure relativement simple et qui puisse fonctionner en régime permanent sans induire des pertes magnétiques importantes dans la ligne d'arbre.

L'amortisseur de vibrations selon l'invention est caractérisé en ce qu'il comporte
- un stator comprenant une couronne, des dents ferromagnétiques et des encoches, dont chacune contient deux barres isolées, l'enroulement des spires étant à pas diamètral et les spires étant toutes indépendantes, ledit stator étant à une très faible distance de la ligne d'arbre,
- un excitateur asservi à la vitesse de rotation de l'arbre, dont le stator alimente chaque phase du stator de l'amortisseur en courant alternatif sinusoïdal,
- un régulateur ne laissant passer le courant dans chaque phase des spires du stator que pendant un quart de période, avec un angle d'enclenchement identique pour toutes les phases et tel que la pression magnétique exercée sur l'arbre repousse son axe de rotation vers son axe géométrique.

Il répond en outre de préférence à au moins l'une des caractéristiques suivantes :
- Le stator de l'excitateur comporte autant d'encoches que le stator de l'amortisseur, mais une seule barre par encoche, et l'inducteur de cet excitateur est un inducteur tournant quadripolaire.
- Les barres d'un même plan de son stator sont reliées entre elles, ainsi que les barres à une extrémité de l'excitateur, et les deux cercles de court-circuit ainsi formés sont reliés par un conducteur.
- La section droite du conducteur reliant les deux cercles de court-circuit est suffisamment grande pour le passage du courant correspondant à un angle d'enclenchement nul.

L'amortisseur de vibrations selon l'invention met à profit la pression électromagnétique qui prend naissance à la surface d'un matériau magnétique placé dans un champ magnétique. Lorsque ce matériau n'est pas saturé, l'induction et la pression sont normales à sa surface, la pression étant proportionnelle au carré de l'induction. Dans une machine synchrone habituelle, l'effort exercé sur le rotor est symétrique par rapport à l'axe, de sorte que l'effort résultant est nul. Dans l'amortisseur de vibrations de l'invention, on introduit une forte dissymétrie du champ magnétique, de façon à concentrer les lignes de flux sur une portion de la périphérie du rotor, et à engendrer ainsi une force radiale dans l'axe de symétrie du flux.

La dissymétrie du champ magnétique est obtenue par le bobinage particulier du stator défini ci-dessus, qui comporte autant de phases que d'encoches par pôle, couplé au régulateur agissant entre l'excitateur et l'amortisseur de vibration.

Il est décrit ci-après, à titre d'exemple et en référence aux figures du dessin annexé, un amortisseur électro-magnétique de vibrations d'une ligne d'arbre selon l'invention.

La figure 1 représente un schéma de bobinage développé de l'amortisseur de vibrations et ses liaisons avec le bobinage de l'excitateur par l'intermédiaire du régulateur.

La figure 2 représente schématiquement la répartition du courant dans le stator à un instant donné.

La figure 3 représente en section droite la répartition des lignes de flux magnétique dans la ligne d'arbre et le stator.

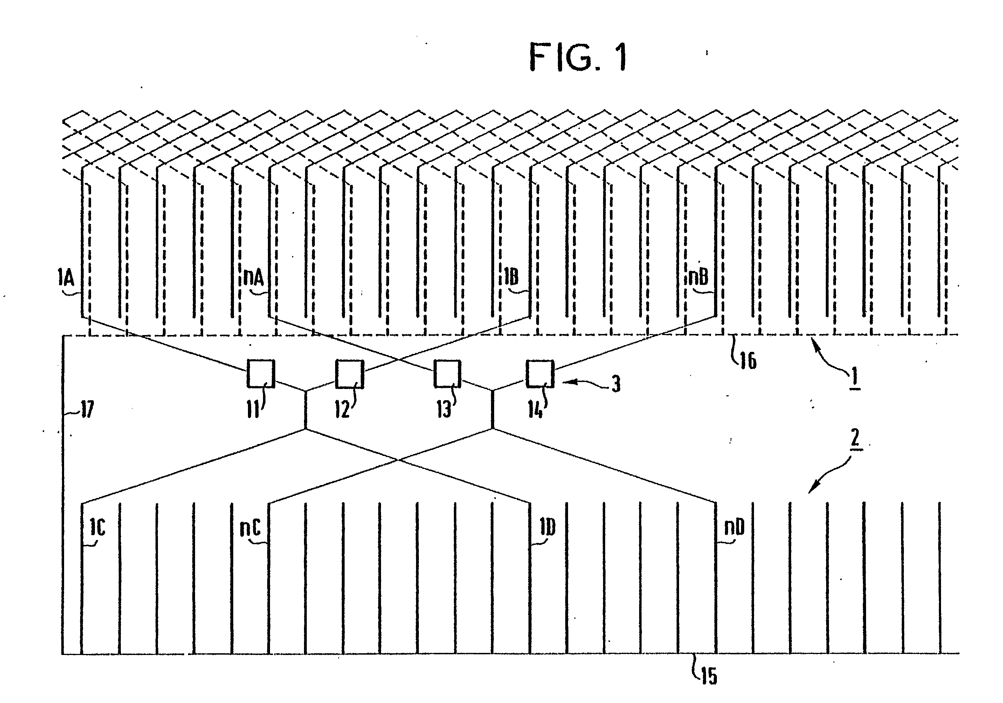

Dans le schéma de bobinage de la figure 1, les enroulements du stator de l'amortisseur et de l'excitateur sont représentés développés. L'enroulement 1 du stator de l'amortisseur est à pas diamétral, les spires étant toutes indépendantes. L'enroulement comporte donc autant de phases que d'encoches par pôle, les connections avec le régulateur des barres d'encoche 1A, 1B et nA, nB ayant seules été représentées pour plus de clarté.

Le stator 2 de l'excitateur alimente à travers le régulateur 3 chaque phase du stator de l'amortisseur en courant alternatif sinusoïdal, de sorte que la répartition spatiale du courant dans les barres de ce dernier stator soit également sinusoïdale. Les courants dans les barres sont déphasés d'angles $\alpha$, $2\alpha$, ----, $n\alpha$.

L'excitateur comprend le stator 2 représenté développé, comportant autant d'encoches que celui du stator de l'amortisseur, avec une seule barre par encoche. Les barres de deux pôles de même nom sont couplées deux à deux (1C avec 1D,-------, nC avec nD). Il circule dans chacune des barres la moitié du courant total qui parvient au régulateur. Il comprend en outre un inducteur tournant quadripolaire (non représenté) analogue à celui d'un alternateur normal monté sur la ligne d'arbre. Son fonctionnement est semblable à celui d'un alternateur à 4 pôles dont le stator comporterait autant de phases que d'encoches par pôle. Le couplage des barres de pôles de même nom deux à deux permet d'équilibrer le rotor de l'excitateur. La répartition du flux y est donc symétrique, et l'effort résultant sur ce rotor est nul.

Du fait du montage du rotor de l'excitateur sur la ligne d'arbre, ce dernier est asservi à la rotation de l'arbre. Le champ dans l'amortisseur de vibrations tourne donc en synchronisme avec le rotor. Les pertes induites par courants de Foucault sont de ce fait restreintes à celles dues aux harmoniques de la denture du stator.

Le régulateur se compose d'une série de thyristors décalés ou de transistors, dont seuls quatre 11, 12, 13, 14 ont été représentés. Ceux-ci, comme indiqué ci-dessus, laissent passer le courant dans les barres du stator de l'amortisseur pendant un quart de période, leur angle d'enclenchement commun étant réglable. Le réglage de cet angle permet de déphaser spatialement la force afin de l'opposer convenablement à la vibration. L'effort maximum sur l'arbre est obtenu pour un angle d'enclenchement nul, et l'effort minimum, sensiblement égal à 70% du maximum, pour un angle de 45°.

Pour assurer le retour du courant, toutes les barres à une extrémité de l'excitateur sont mises en court-circuit (cercle de court-circuit 15), et les barres d'un même plan du stator de l'amortisseur sont reliées entre elles (cercle de court-circuit 16). Les deux cercles de court-circuit sont connectés par un conducteur 17 dimensionné pour le courant maximum qui serait susceptible de le traverser (dans le cas d'un angle d'enclenchement nul).

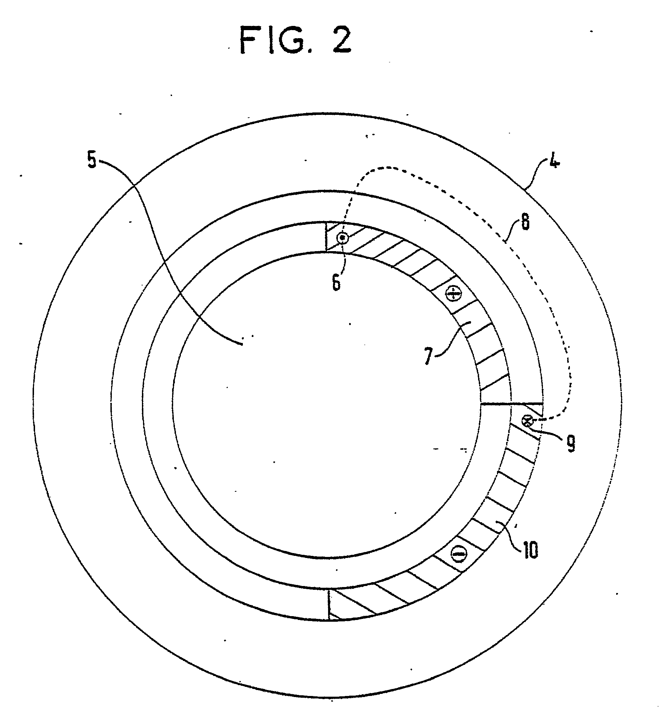

La figure 2 représente la répartition du courant à un instant donné dans le stator 4, entourant la ligne d'arbre 5. La barre 6 du quadrant 7, dans laquelle le courant circule du bas vers le haut par rapport au plan de la figure, est reliée par le conducteur 8 à une barre 9 du quadrant adjacent 10, où le courant circule du haut vers le bas par rapport au plan de la figure. La régulation ne laisse passer le courant dans chaque phase que pendant un quart de la période.

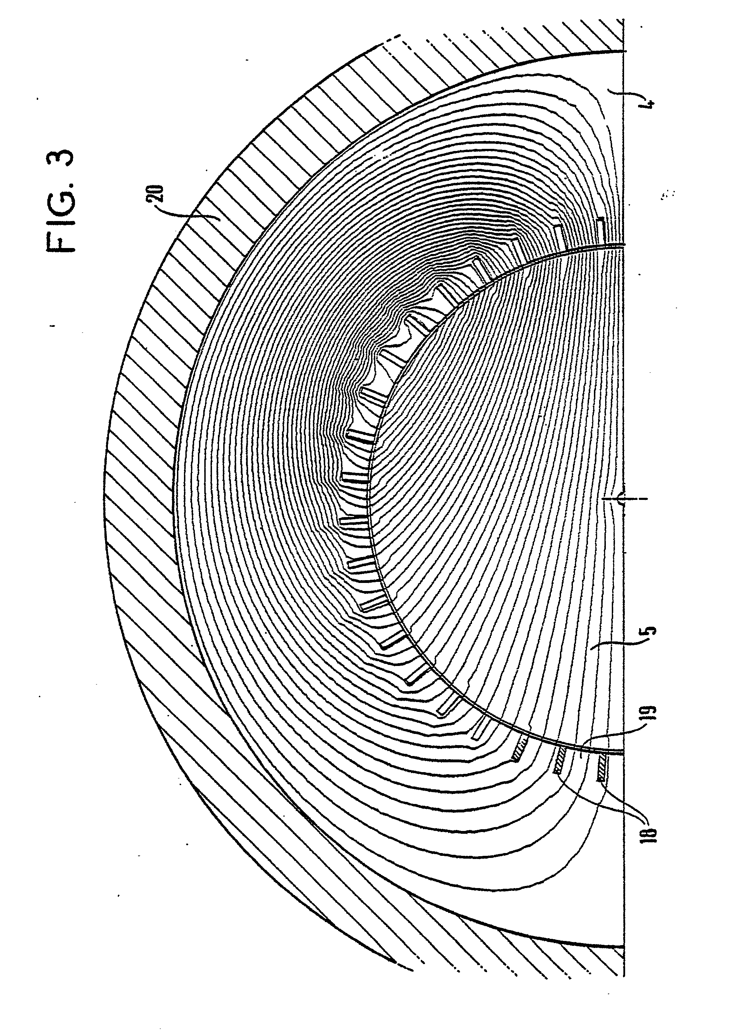

La figure 3 représente les lignes de force de l'inducteur magnétique dans le stator 4 et la ligne d'arbre 5, séparées par un entrefer (1 à 2 mm) aussi faible que possible, afin de limiter la consommation d'ampères-tours et par suite l'intensité du courant inducteur. Le stator comporte les encoches 18 séparées par les dents 19. Il est entouré par la carcasse 20. On voit la répartition dissymétrique des lignes de force, tendant du côté où les lignes de force sont plus concentrées à exercer une pression magnétique radiale centrifuge. L'arbre est attiré par le stator dans la zone de concentration des lignes de flux.

## Revendications

1/ Amortisseur de vibrations d'une ligne d'arbre (18, fig.3), caractérisé en ce qu'il comporte
- un stator (4) comprenant une couronne, des dents ferromagnétiques (7) et des encoches (8), dont chacune contient deux barres isolées, l'enroulement des spires étant à pas diamétral et les spires étant toutes indépendantes, ledit stator étant à une très faible distance de la ligne d'arbre,
- un excitateur asservi à la vitesse de rotation de l'arbre, dont le stator (2 ,fig.1) alimente chaque phase du stator de l'amortisseur en courant alternatif sinusoïdal,
- un régulateur (3) ne laissant passer le courant dans chaque phase des spires du stator que pendant un quart de période, avec un angle d'enclenchement identique pour toutes les phases et tel que la pression magnétique exercée sur l'arbre repousse son axe de rotation vers son axe géométrique.

2/ Amortisseur de vibrations selon la revendication 1, caractérisé en ce que le stator (2) de l'excitateur comporte autant d'encoches que le stator (1) de l'amortisseur, mais une seule barre par encoche, et en ce que l'inducteur de cet excitateur est un inducteur tournant quadripolaire.

3/ Amortisseur de vibrations selon les revendications 1 ou 2, caractérisé en ce que les barres d'un même plan de son stator (1) sont reliées entre elles (16), ainsi que les barres à une extrémité de l'excitateur (15), et en ce que les deux cercles de court-circuit ainsi formés sont reliés par un conducteur (17).

4/ Amortisseur de vibrations selon la revendication 3, caractérisé en ce que la section droite du conducteur (17) reliant les deux cercles de court-circuit est suffisamment grande pour le passage du courant correspondant à un angle d'enclenchement nul.

## Patentansprüche

1. Vibrationsdämpfer für einen Wellenstrang (18, Figur 3), dadurch gekennzeichnet, daß er folgende Komponenten aufweist:
- einen Stator (4) mit einem Ring, ferromagnetischen Zähnen (7) und Nuten (18), die je zwei isolierte Stäbe enthalten, wobei die Wicklung der Windungen eine diametrale Schrittweite ergibt und die Windungen sämtlich voneinander unabhängig sind, und wobei der Stator einen sehr kleinen Abstand zum Wellenstrang aufweist,
- eine auf die Rotationsgeschwindigkeit der Welle eingeregelte Erregermaschine, deren Stator (2, Figur 1) jede Phase des Stators des Dämpfers mit sinusförmigem Wechselstrom speist, und
- einen Regler (3), der in jeder Phase der Statorwindungen den Strom nur während einer Viertelperiode mit einem Einschaltwinkel fließen läßt, der für alle Phasen gleich und so gewählt ist, daß der auf die Welle ausgeübte magnetische Druck die Rotationsachse der Welle in die geometrische Achse drückt.

2. Vibrationsdämpfer nach Anspruch 1, dadurch gekennzeichnet, daß der Stator (2) der Erregermaschine ebensoviele Nuten wie der Stator (1) des Dämpfers aufweist, jedoch nur einen Stab pro Nut, und daß der Induktor der Erregermaschine ein vierpoliger umlaufender Induktor ist.

3. Vibrationsdämpfer nach den Ansprüchen 1 oder 2, dadurch gekennzeichnet, daß die Stäbe einer Ebene des Stators (1) des Dämpfers miteinander verbunden (16) sind, ebenso wie die Stäbe eines Endes der Erregermaschine (15), und daß die beiden so gebildeten Kurzschlußkreise miteinander durch einen Leiter (17) verbunden sind.

4. Vibrationsdämpfer nach Anspruch 3, dadurch gekennzeichnet, daß der Querschnitt des die beiden Kurzschlußkreise miteinander verbindenden Leiters (17) für den Durchtritt des einem Einschaltwinkel 0 entsprechenden Stromes ausreichend groß ist bemessen ist.

## Claims

1. A vibration damper for a shaft line (18, Figure 3), characterized in that it comprises:

a stator (4) comprising a ring, ferromagnetic teeth (7), and slots (8), each containing tow insulated bars, the winding of the turns being diametral in pitch and all of the turns being independent, said stator at a very small distance from the shaft line;

an exciter constrained to rotate at the speed of rotation of the shaft with the exciter stator (2, Figure 1) feeding each phase of the damper stator with sinusoidal alternating current; and

a regulator (3) allowing current to flow into each phase of the stator turns during one quarter of a period only, with all phases having the same firing angle such that the magnetic pressure exerted on the shaft urges its axis of rotation towards its geometrical axis.

2. A vibration damper according to claim 1, characterized in that the stator (2) of the exciter includes as many slots as the stator (1) of the damper, but with only one bar per slot, and in that the inductor of said exciter is a four-pole rotary inductor.

3. A vibration damper according to claim 1 or 2, characterized in that the bars in the same plane of the damper stator (1) are interconnected (16), as are the bars at one end of the exciter (15), and in that the two short circuit circles formed in this way are interconnected by a conductor (17).

4. A vibration damper according to claim 3, characterized in that the right cross-section of the conductor (17) interconnecting the two short-circuit circles is sufficiently large to be able to pass the current corresponding to a zero firing angle.

# FIG. 1

EP 0 234 421 B1

# FIG. 2

FIG. 3